# EUROPEAN PATENT APPLICATION

(11) **EP 1 976 163 A2**
(43) Date of publication of application: **01.10.2008**
(21) Application number: 08004977.8
(22) Date of filing: 17.03.2008
(51) Int. Cl.: H04H 60/41

(54) **Broadcasting reception device and channel setting method for broadcasting reception device**

(30) Priority: 30.03.2007 JP 2007091659
(71) Applicant: Kabushiki Kaisha Toshiba, Minato-ku, Tokyo 105-8001 (JP)
(72) Inventor: Miyazaki, Satoshi, Tokyo 105-8001 (JP)
(74) Representative: HOFFMANN EITLE

(57) **Abstract**

According to one embodiment, there is provided a broadcasting reception device including a tuner section (12) which demodulates a plurality of broadcasting signals with channel specification information, and a control section (30) which successively searches the plurality of broadcasting signals with channel specification information receivable by the tuner section, sets channel numbers to the broadcasting signals, respectively, according to the channel specification information, displays overlapping of the channel numbers for a user when the channel numbers specified by the channel specification information overlap, and allows a plurality of broadcasting stations whose channel numbers overlap to select a broadcasting signal to which the channel number specified by the channel specification information should be set so as to set the channel number for the selected broadcasting signal.

## Description

The present invention relates to a broadcasting reception device which sets channels according to channel specification information and a channel setting method for the broadcasting reception device.

Recently, demands for digital terrestrial broadcasting are increasing according to widespread digital techniques, and this situation is applied also to European countries such as UK, France and Germany, and the number of countries where the release of iDTV is considered is increasing.

In the digital terrestrial broadcasting, channels should be set as a setting process executed at the time of purchase, and receivable broadcasting signals are searched according to broadcasting regional information about the set broadcasting reception device so that the channels are set. When the channel searching process is executed in order to set channels, a plurality of broadcasting signals are occasionally related with one channel number.

Patent Document 1 (Jpn. Pat. Appln. KOKAI Publication No. 2004-222049) discloses a technique in which when broadcasting out of a region can be received and one channel number is allocated to a plurality of broadcasting, different branch numbers are set as channel numbers so that the plurality of broadcasting with the same channel are discriminated.

In the conventional technique of Patent Document 1, however, when the branch numbers are given to the channel numbers, channel selection puts a strain on a user's operation. Further, in European countries, there is a problem as to how the broadcasting reception device treats channel specification information such as LCN (Logical Channel Number).

That is, the broadcasting in European countries conforms to DVB standards, but items such as presence/absence of viewing limitation, and presence/absence of responses to MHEG5 (Multimedia and Hypermedia Expert Group 5) and MHP (Multimedia Home Platform) vary in respective countries. For this reason, it is required to be capable of automatically reflecting the specification of countries in the setting for the countries without user's consciousness. One of the specifications different among countries is LCN (Logical Channel Number) as the channel specification information, and LCN is a logical channel number for specifying that a channel number is set as a broadcasting station in advance.

As to LCN, for example, channel numbers are set in advance in such a manner that 1 ch is set for BBC ONE and 7 ch is set for BBC Three at the time of setting the channels. However, occasionally LCN overlaps in a plurality of countries in one region and television programs and radio programs use the same frequency band in some European countries. In this case, when the channels are set in order of acquisition, it is difficult for a user to understand the channel setting.

It is an object of the present invention to provide a broadcasting reception device which executes a channel setting process according to channel specification information, and a broadcasting reception method.

One embodiment for achieving the object is a broadcasting reception device comprising: a tuner section (12) which demodulates a plurality of broadcasting signals with channel specification information; and a control section (30) which successively searches said plurality of broadcasting signals with channel specification information receivable by the tuner section, sets channel numbers to the broadcasting signals, respectively, according to the channel specification information, displays overlapping of the channel numbers for a user when the channel numbers specified by the channel specification information overlap, and allows a plurality of broadcasting stations whose channel numbers overlap to select a broadcasting signal to which the channel number specified by the channel specification information should be set so as to set the channel number for the selected broadcasting signal.

At the time of the channel searching process, when the channel numbers of the channel specification information and channels of television and radio broadcasting signals overlap, a user can arbitrarily select broadcasting signals and set channel numbers according to the channel specification information.

The invention can be more fully understood from the following detailed description when taken in conjunction with the accompanying drawings, in which:
FIG. 1 is a block diagram illustrating one example of a constitution of a broadcasting reception device according to one embodiment of the present invention;
FIG. 2 is a flow chart illustrating one example of a channel setting process in the broadcasting reception device according to one embodiment of the present invention;
FIG. 3 is a flow chart illustrating one example of the channel setting process in the broadcasting reception device in the case where a television and a radio coexist according to one embodiment of the present invention;
FIG. 4 is an explanatory diagram illustrating one example of the channel setting process in the broadcasting reception device according to one embodiment of the present invention;
FIG. 5 is an explanatory diagram illustrating one example of a program selecting screen at the time of the channel setting process in the broadcasting reception device according to one embodiment of the present invention;
FIG. 6 is an explanatory diagram illustrating one example of the program selecting screen at the time of the channel setting process in the broadcasting reception device according to one embodiment of the present invention;
FIG. 7 is an explanatory diagram illustrating one example of the program selecting screen at the time of the channel setting process in the broadcasting reception device according to one embodiment of the present invention;
FIG. 8 is an explanatory diagram illustrating one example of the program selecting screen at the time of the channel setting process in the broadcasting reception device according to one embodiment of the present invention;
FIG. 9 is an explanatory diagram illustrating one example of the program selecting screen at the time of the channel setting process in the broadcasting reception device according to one embodiment of the present invention;
FIG. 10 is an explanatory diagram illustrating one example of the program selecting screen at the time of the channel setting process in the broadcasting reception device according to one embodiment of the present invention;
FIG. 11 is an explanatory diagram illustrating one example of a structure of a broadcasting signal handled by the broadcasting reception device according to one embodiment of the present invention;
FIG. 12 is an explanatory diagram illustrating one example of a structure of NIT handled by the broadcasting reception device according to one embodiment of the present invention; and
FIG. 13 is an explanatory diagram illustrating one example of a structure of LCN (Logical Channel Descriptor) handled by the broadcasting reception device according to one embodiment of the present invention.

An embodiment of the present invention will be described in detail below with reference to the drawings.

### <One Example of Broadcasting Reception Device according to One Embodiment of the Present Invention>

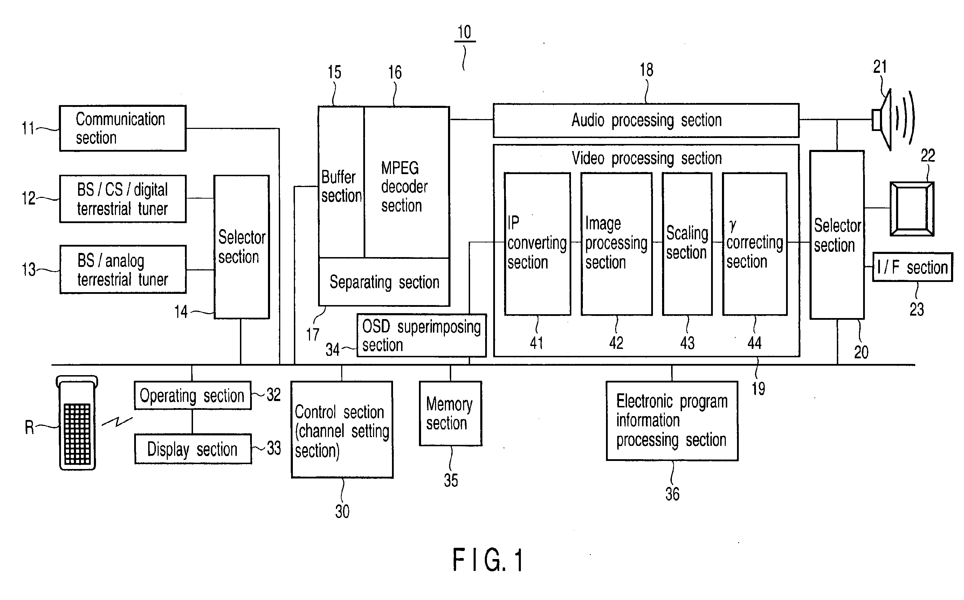

One example of the broadcasting reception device according to one embodiment of the present invention will be described in detail below with reference to the drawings. FIG. 1 is a block diagram illustrating one example of a constitution of the broadcasting reception device according to one embodiment of the present invention.

### (Constitution of Broadcasting Reception Device)

One example of the constitution of the broadcasting reception device such as a digital television device according to one embodiment of the present invention will be described in detail below with reference to the drawings. FIG. 1 is a block diagram illustrating one example of the constitution of the broadcasting reception device according to one embodiment of the present invention. The embodiment of the present invention is not limited to the digital television device, and can be applied also to a recording/reproducing device such as a hard disc recorder having a function for receiving digital terrestrial broadcasting.

A broadcasting reception device 10 is a television device as one example as shown in FIG. 1, and a control section 30 is connected to respective sections via a data bus in order to control an entire operation. The broadcasting reception device 10 has a selector section 14 on an input side and a selector section 20 on an output side. The selector section 14 on the input side is connected to a BS/CS/digital terrestrial tuner section 12 and a BS/analog terrestrial tuner section 13. A communication section 11 having LAN and a mail function is connected to the control section 30 via the data bus.

The broadcasting reception device 10 further has a buffer section 15, a separating section 17, an MPEG decoder section 16, and an OSD (On Screen Display) superimposing section 34. The buffer section 15 temporarily stores therein a demodulated signal from the BS/CS/digital terrestrial tuner section 12. The separating section 17 separates a packet as the stored demodulated signal according to types. The MPEG decoder section 16 executes the MPEG decoding process on the audio-visual packet supplied from the separating section 17 so as to output an audio-visual signal. The OSD superimposing section 34 superimposes operation information or the like on a video signal.

The broadcasting reception device 10 further has an audio processing section 18, a video processing section 19, a selector section 20, a speaker section 21, a display section 22, and an I/F section 23. The audio processing section 18 executes an amplifying process or the like on the audio signal from the MPEG decoder section 16. The video processing section 19 receives the video signal from the MPEG decoder section 16 and the OSD superimposing section 34 and executes a desirable video process. The selector section 20 selects an output destination of the audio signal and the video signal. The speaker section 21 outputs an audio according to the audio signal from the audio processing section 18. The display section 22 displays a video according to the video signal given by connecting to the selector section 20 on a liquid crystal display screen or the like. The I/F section 23 communicates with external devices.

The video processing section 19 has an IP converting section 41, an image quality processing section 42, a scaling section 43, a γ correcting section 44. The IP converting section 41 converts an interlace signal into a progressive signal. The image quality processing section 42 executes a coring process and an enhancing process. The scaling section 43 executes a scaling process. The γ correcting section 44 executes γ correction on a video signal.

The broadcasting reception device 10 further has a memory section 35 and an electronic program information processing section 36 which are connected to the control section 30 via the data bus. The memory section 35 suitably records therein video information or the like from the BS/analog terrestrial tuner section 13. The electronic program information processing section 36 acquires electronic program information from a broadcasting signal or the like and displays it on the screen. The broadcasting reception device 10 further has an operating section 32 and a display section 33 which are connected to the control section 30 via the data bus. The operating section 32 receives a user's operation and an operation of a remote controller R. The display section 33 displays an operating signal. The remote controller R enables an operation approximately equivalent to that of the operating section 32 provided to a main body of the broadcasting reception device 10, and enables various settings such as tuner operation.

The control section 30 includes a channel setting section which executes a channel setting process according to channel specification information, mentioned later.

In the broadcasting reception device 10 having such a constitution, a broadcasting signal is input into the BS/CS/digital terrestrial tuner section 12 from a reception antenna, and selection is executed here. A selected and demodulated packet type demodulated signal is separated into packets according to types by the separating section 17. An audio-visual packet is decoded by the MPEG decoder section 16 so as to be an audio-visual signal and supplied to the audio processing section 18 and the video processing section 19. In the video processing section 19, the IP converting section 41 converts the interlace signal of the given video signal into a progressive signal. The image quality processing section 42 executes the coring process and the enhancing process, the scaling section 43 executes the scaling process, and the γ correcting section 44 executes γ correction on the video signal. Thereafter, the video signal is supplied to the selector section 20.

The selector section 20 supplies the video signal to the display section 22 according to a control signal from the control section 30, and the video according to the video signal is displayed on the display section 22. The audio according to the audio signal from the audio processing section 18 is output from the speaker section 21.

The OSD superimposing section 34 superimposes operation information and electronic program information on the video signal according to a broadcasting signal, and the video signal passes through the video processing section 19 so that the video according to the video signal is displayed on the display section 22.

### <One Example of Channel Setting Process in the Broadcasting Reception Device according to One Embodiment of the Present Invention>

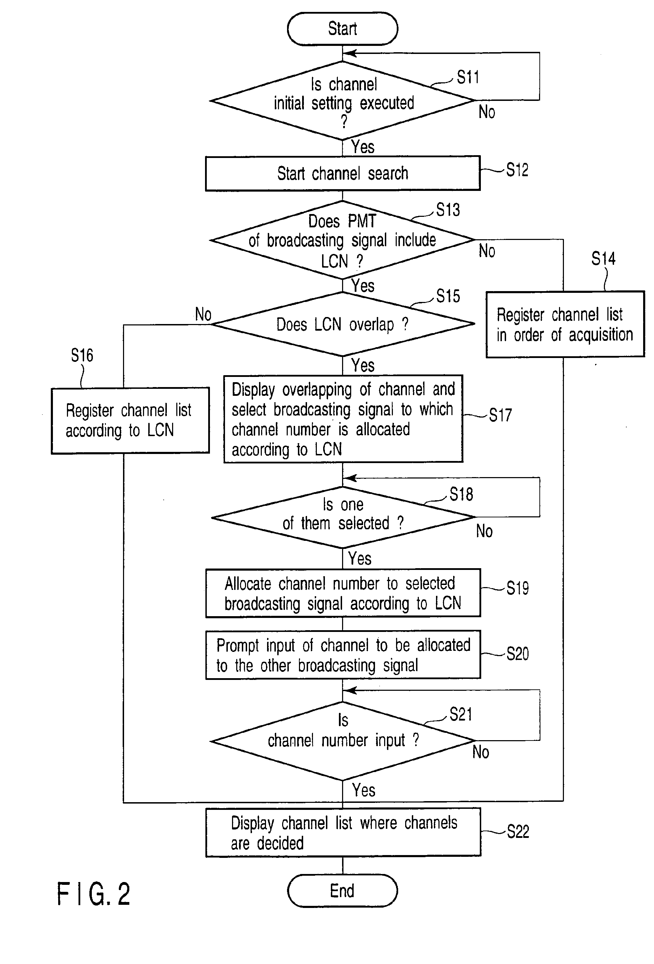

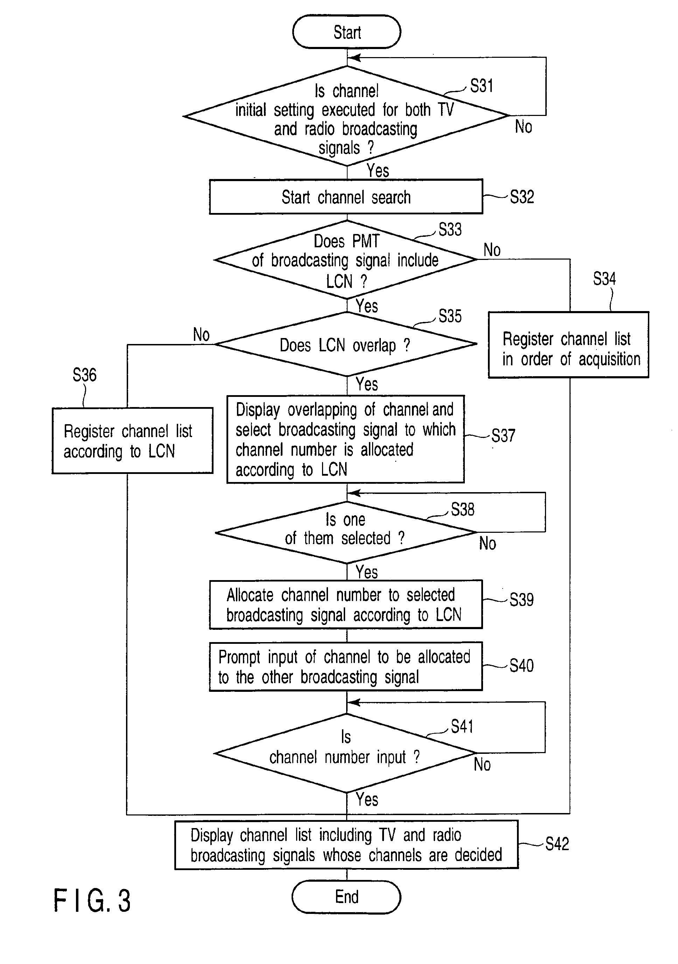

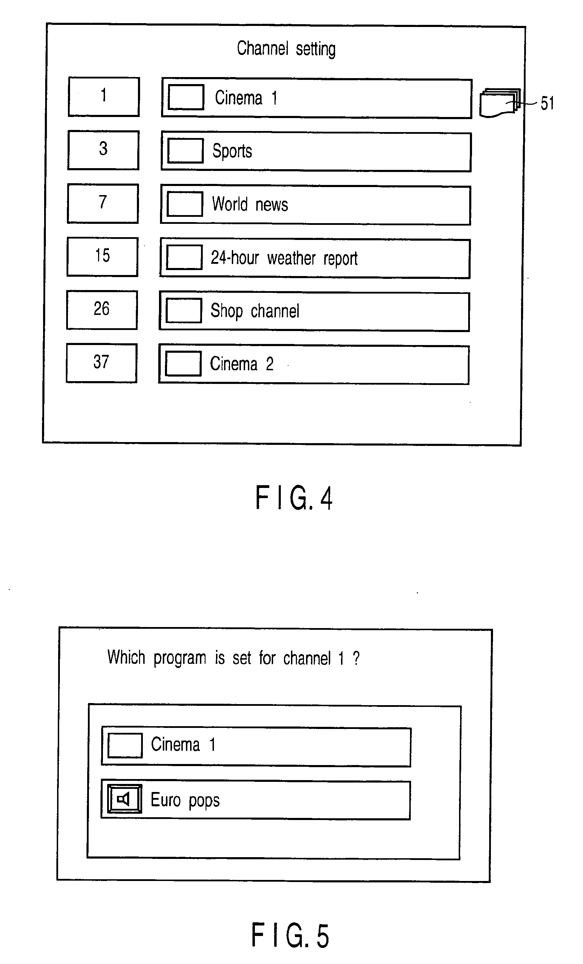

One example of the channel setting process in the broadcasting reception device according to one embodiment of the present invention will be described in detail below with reference to the drawings. FIG. 2 is a flow chart illustrating one example of the channel setting process in the broadcasting reception device according to one embodiment of the present invention. FIG. 3 is a flow chart illustrating one example of the channel setting process in the case where a television and a radio coexist. FIGS. 4 to 10 are explanatory diagrams illustrating examples of a channel setting screen in the broadcasting reception device according to one embodiment of the present invention. Respective steps in the flow charts of FIGS. 2 and 3 can be replaced by circuit blocks, and thus all the steps in the flow charts can be redefined as blocks.

In the broadcasting reception device according to one embodiment of the present invention, after the purchase, a user executes the channel setting process as initial setting of the broadcasting reception device. In the setting, channel numbers of the remote controller should be definitely related to broadcasting signals receivable by a tuner.

In such a channel setting process, the user selects regional information according to a region where the broadcasting reception device is set, and a searching process is executed on the broadcasting signals specified by the regional information. However, the broadcasting signals receivable by the tuner are not always broadcasting signals in the specified region, and a plurality of broadcasting signals in a plurality of regions can be occasionally received.

How to treat channel specification information such as LCN (Logical Channel Number) as the channel specification information of the broadcasting signals becomes a problem.

That is, the broadcasting in European countries conforms to the DVB standards, but items such as presence/absence of viewing limitation, and presence/absence of responses to MHEG5 (Multimedia and Hypermedia Expert Group 5) and MHP (Multimedia Home Platform) vary according to countries. For this reason, it is required to be capable of automatically reflecting the specification of countries in the setting for the countries without user's consciousness of the difference. One of the specifications different among countries is LCN (Logical Channel Number) as the channel specification information, and LCN is a logical channel number for specifying that a channel number is set according to a broadcasting station in advance.

As to LCN, for example, channel numbers are set in advance in such a manner that 1 ch is set for BBC ONE and 7 ch is set for BBC Three at the time of setting the channels. However, occasionally LCN overlaps in a plurality of countries in one region, and in some countries in Europe, television programs and radio programs use the same frequency band. In this case, when the channels are set in order of acquisition, it is difficult for a user to understand the channel setting. The channel setting process according to one embodiment of the present invention which copes with this situation will be described below with reference to the drawings.

### Concrete Process

In the broadcasting reception device 10 according to one embodiment of the present invention, as shown in the flow chart of FIG. 2, the channel setting section of the control section 30 in the broadcasting reception device 10 recognizes an operation of channel initial setting if performed by a user's operation using the remote controller R (step S11). The channel setting section of the control section 30 in the broadcasting reception device 10 starts the channel searching process based on regional information given by the user's operation using the remote controller R (step S12). The channel setting section of the control section 30 in the broadcasting reception device 10 checks whether the NIT of the broadcasting signal includes LCN (step S13).

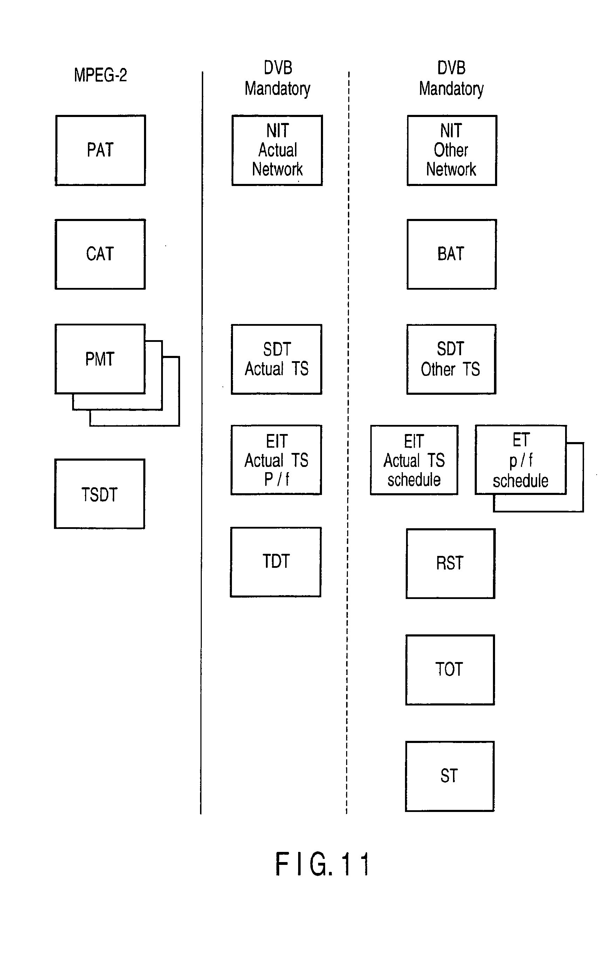

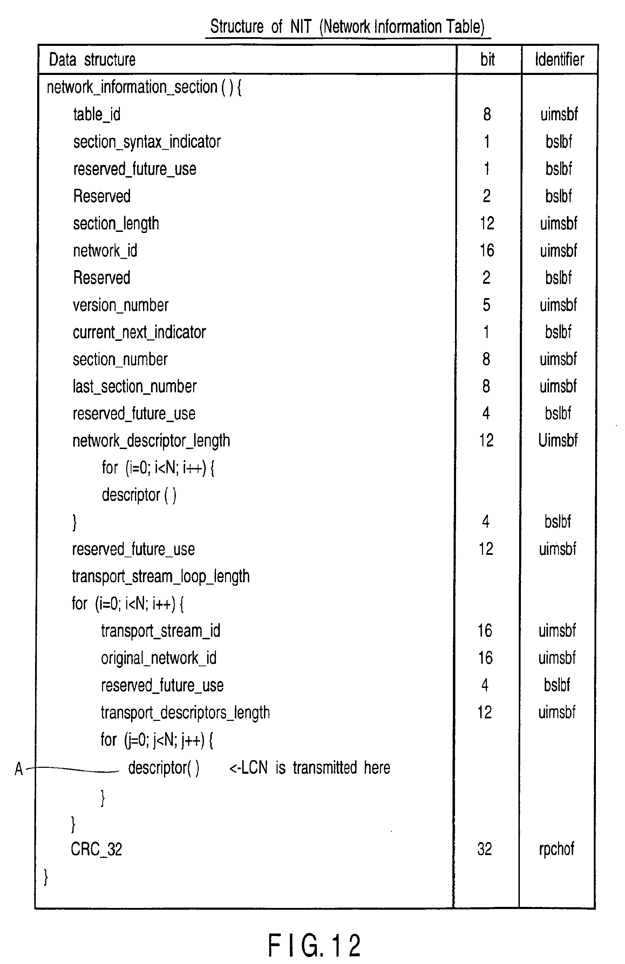

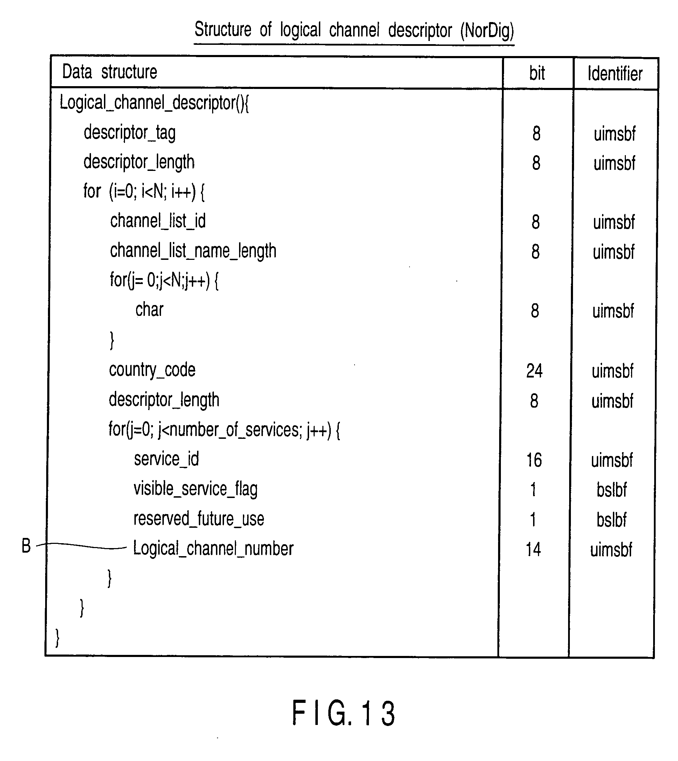

The LCN as the broadcasting specification information will be described with reference to the drawings. FIG. 11 is an explanatory diagram illustrating one example of a structure of the broadcasting signal handled by the broadcasting reception device according to one embodiment of the present invention. FIG. 12 is an explanatory diagram illustrating one example of a structure of NIT. FIG. 13 is an explanatory diagram illustrating one example of a structure of LCN (Logical Channel Descriptor).

The structure of a digital terrestrial broadcasting signal handled by the broadcasting reception device includes, as shown in FIG. 11 as an example, PAT, CAT, PMT and TSDT according to the standards of MPEG-2. At the same time, the structure of the digital terrestrial broadcasting signal includes NIT (Actual Network), SDT, EIT and TDT according to the DVB standards. The structure of the digital terrestrial broadcasting signal optionally includes NIT (Other Network), BAT, SDT, EIT, RST, TOT and ST as one example.

LCN is included in NIT of DVB shown in FIG. 11, and LCN is superimposed as Logical Channel Descriptor on a descriptor portion shown by a descriptor A in the structure of NIT in FIG. 12. With reference to the structure of LCN in FIG. 13, channel information such as "3 ch" is described in "Logical channel number" of a descriptor B.

The channel setting section of the control section 30 in the broadcasting reception device 10 determines that the NIT of the broadcasting signal does not include LCN. At this time, VHF 1 ch to UHF 69 ch are successively selected so as to be searched for a service, and a channel list is registered in order of acquisition (step S14).

When the channel setting section of the control section 30 in the broadcasting reception device 10 determines that the NIT of the broadcasting signal includes LCN, the channel setting section determines whether a channel number specified by LCN overlaps (step S15). When the channel setting section determines that the channel number does not overlap, it sequentially executes the channel searching process according to LCN. The channel setting section successively selects VHF 1 ch to UHF 69 ch, for example, so as to search for a service, and registers a channel list (step S16).

When the channel setting section of the control section 30 in the broadcasting reception device 10 determines that the channel numbers specified by LCN overlap, it generates a video signal for posting the overlapping of the channel to the user in such a manner that a mark 51 of the channel list shown in FIG. 4 is displayed. The OSD superimposing section 34 superimposes the information about the overlapping on the video signal.

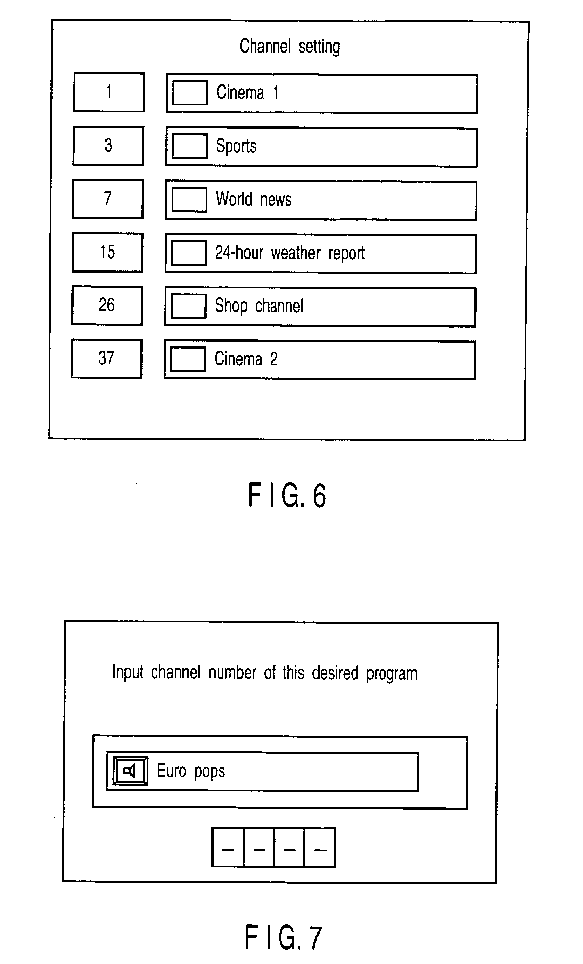

The channel setting section of the control section 30 displays a selecting screen shown in FIG. 5, and allows a broadcasting signal to which the channel number is allocated to be selected from the overlapped broadcasting signals according to LCN (step S17). When the channel setting section of the control section 30 recognizes an operating signal for selecting one of the broadcasting signal (step S18), it allocates the channel number to the selected broadcasting signal according to LCN (step S19). As shown in the channel list of FIG. 6, the channel number "1" is allocated to "cinema 1" according to LCN.

The channel setting section of the control section 30 prompts the user to input a channel which should be allocated to an unselected broadcasting signal, namely, "Euro Pops" in such a manner that an input screen shown in FIG. 7 is displayed (step S20). "Euro Pops" in FIGS. 5, 7, 8 and 10 is an example of radio broadcasting, but since the embodiment in the flow chart of FIG. 2 does not specify radio broadcasting, this embodiment is supposed to include the case of television broadcasting.

It is preferable that the channel setting section of the control section 30 automatically set a channel number for an unselected broadcasting signal according to a channel number prepared as a default.

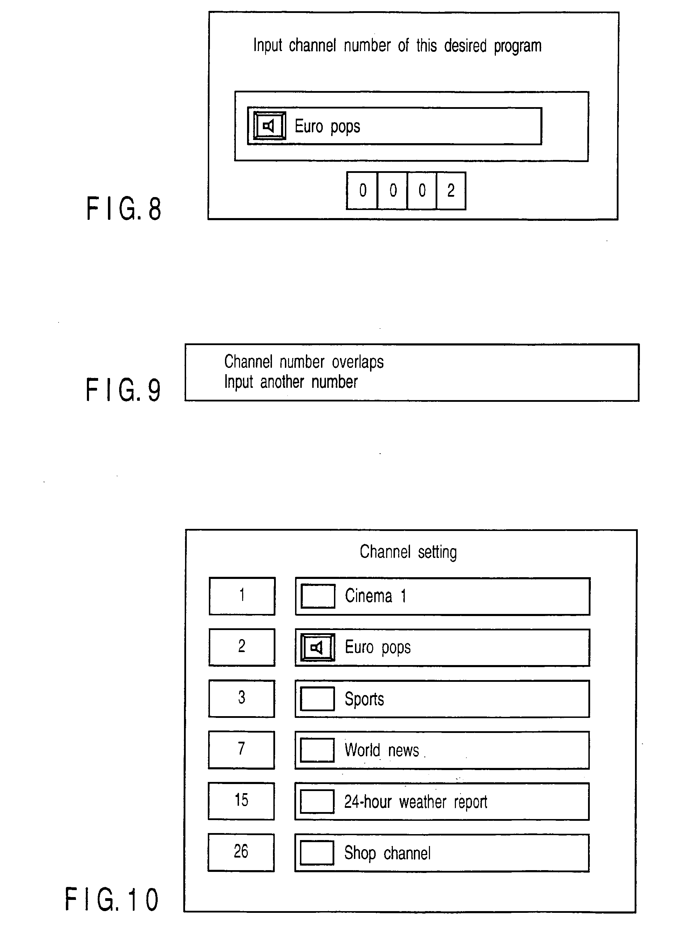

When the channel setting section of the control section 30, as shown in FIG. 8, recognizes the input of the channel number (step S21), a channel list of the broadcasting signals whose channels are decided is displayed as shown in FIG. 10 (step S22). The channel list is registered in the memory section 35, and a channel selecting process is executed according to the created channel list. In the case where the channel numbers input at step S21 are already present, a warning screen shown in FIG. 9 is preferably displayed.

At the above channel setting process, the user is informed of the overlapped LCN, and a broadcasting signal to which the channel number specified by LCN is allocated can be selected, so that a number given to the other broadcasting signal can be specified. As a result, even if overlapped LCN is present, the channel setting process can be executed without user's confusion.

The Channel Setting for Both Television Broadcasting and Radio Broadcasting

The channel setting process in the case of the channel setting for television broadcasting and radio broadcasting in the broadcasting reception device 10 will be described below with reference to a flow chart.

That is, in the broadcasting reception device 10, as shown in the flow chart of FIG. 3, when the user performs a channel initial setting operation for television broadcasting and radio broadcasting by means of the operation of the remote controller R, the channel setting section of the control section 30 in the broadcasting reception device 10 recognizes this operation (step S31). The channel setting section of the control section 30 in the broadcasting reception device 10 starts the channel searching process based on regional information given by the user's operation of the remote controller R (step S32).

The channel searching process successively selects and searches VHF 1 ch to UHF 69 ch for a service. When a channel is found, a determination is made whether the channel is TV broadcasting or radio broadcasting. When it is neither of them, this channel is not added to the list.

Step S33 to step S41 in the flow chart of FIG. 3 are the same as step S13 to step S21 in the flow chart of FIG. 2, and thus description thereof is omitted. At this time, the respective steps treat radio broadcasting equivalently to television broadcasting, and the channel searching process is executed. A channel list where the broadcasting signals for TV and radio whose channels are decided are mixed is displayed (step S42). This channel list is registered in the memory section 35, and the channel selecting process is executed according to the created channel list.

At this time, in another embodiment, when the channel setting section of the control section 30 in the broadcasting reception device 10 searches for channels for TV and radio, a television broadcasting preference mode is prepared. In the case where the television broadcasting preference mode is selected by the remote controller R, when a channel number specified by the channel specification information such as LCN overlaps and one is a television broadcasting signal and the other is a radio broadcasting signal, preference is automatically given to the television broadcasting signal without waiting for a user's decision so that the channel number specified by the channel specification information is preferably set.

On the contrary, in the case where a radio broadcasting preference mode is prepared and this mode is selected by the remote controller R, when a channel number specified by the channel specification information such as LCN overlaps and one is a television broadcasting signal and the other is a radio broadcasting signal, preference is automatically given to the radio broadcasting signal without waiting for a user's decision so that the channel numbers specified by the channel specification information are preferably set.

The above various embodiments have described the case where the channel specification information is LCN in European countries as example, but the present invention is not limited to the embodiments. The present invention can be applied also to even broadcasting reception devices for Japan and the other countries, in which channel specification information other than LCN is used.

A person skilled in the art can realize the present invention according to the above various embodiments, and easily comes up with various modified examples of these embodiments. The present invention can be applied to various embodiments without inventive abilities. Therefore, the present invention covers a wide range which is not inconsistent with the disclosed principle and new features, and thus is not limited to the above embodiments.

## Claims

1. A broadcasting reception device **characterized by** comprising:
a tuner section (12) which demodulates a plurality of broadcasting signals with channel specification information; and
a control section (30) which successively searches said plurality of broadcasting signals with channel specification information receivable by the tuner section, sets channel numbers to the broadcasting signals, respectively, according to the channel specification information, displays overlapping of the channel numbers for a user when the channel numbers specified by the channel specification information overlap, and allows a plurality of broadcasting stations whose channel numbers overlap to select a broadcasting signal to which the channel number specified by the channel specification information should be set so as to set the channel number for the selected broadcasting signal.

2. The broadcasting reception device according to claim 1, **characterized in that** when the channel number specified by the channel specification information overlaps, the control section displays the overlapping of the channel number for the user, allows said plurality of broadcasting stations where the channel number overlaps to select a broadcasting signal to which the channel number specified by the channel specification information should be set, and prompts the user to input a channel number which should be given to an unselected broadcasting signal.

3. The broadcasting reception device according to claim 1, **characterized in that** the channel specification information is LCN which is superimposed on a broadcasting signal.

4. The broadcasting reception device according to claim 1, **characterized in that** the tuner section and the control section execute searching and channel setting operations not only on television broadcasting signals but also on radio broadcasting signals.

5. The broadcasting reception device according to claim 1, **characterized in that** in the case where the tuner section and the control section execute searching and channel setting operations not only on television broadcasting signals but also on radio broadcasting signals and a television broadcasting preference mode is prepared and selected, when a channel number specified by the channel specification information overlaps and one is a television broadcasting signal and the other is a radio broadcasting signal, the control section sets a channel number specified by the channel specification information for the television broadcasting signal as a priority.

6. A channel setting method for a broadcasting reception device, **characterized by** comprising:
when successively searching a plurality of broadcasting signals with channel specification information receivable by a tuner section, setting channel numbers to the broadcasting signals, respectively, according to the channel specification information;
when a channel number specified by the channel specification information overlaps, displaying the overlapping of the channel number for a user;
allowing a plurality of broadcasting stations where the channel number overlaps to select a broadcasting signal to which the channel number specified by the channel specification information should be set;
setting the channel number to the selected broadcasting signal; and
selecting a channel number which should be given to an unselected broadcasting signal.

7. The channel setting method for a broadcasting reception device according to claim 6, **characterized in that** when a channel number specified by the channel specification information overlaps, the overlapping of the channel number is displayed for the user, a broadcasting signal to which the channel number specified by the channel specification information should be set is selected by said plurality of broadcasting stations where the channel number overlaps, and an input of a channel number which should be given to an unselected broadcasting signal is prompted.

8. The channel setting method for a broadcasting reception device according to claim 6, **characterized in that** the channel specification information is LCN superimposed on a broadcasting signal.

9. The channel setting method for a broadcasting reception device according to claim 6, **characterized in that** objects of the channel setting include not only television broadcasting signals but also radio broadcasting signals.

10. The channel setting method for a broadcasting reception device according to claim 6, **characterized in that** in the case where the objects of the channel setting are not only television broadcasting signals but also radio broadcasting signals, when a television broadcasting preference mode is prepared and selected and a channel number specified by the channel specification information overlaps, one is a television broadcasting signal and the other is a radio broadcasting signal, a preference is given to the television broadcasting signal so that the channel number specified by the channel specification information is set.
